# EUROPEAN PATENT SPECIFICATION

(11) **EP 1 818 217 B1**
(45) Date of publication and mention of the grant of the patent: **03.03.2010**
(21) Application number: 06001931.2
(22) Date of filing: 31.01.2006
(51) Int. Cl.: B60R 5/04

(54) **Load cover**
Gepäckabdeckung
Cache-bagage

(43) Date of publication of application: 15.08.2007
(73) Proprietor: Ford Global Technologies, LLC, Dearborn, MI 48126 (US)
(72) Inventor: Berg, Pernilla, 417 43 Göteborg (SE); Hayden, Björn, 442 75 Lycke (SE)
(74) Representative: Valea AB

(56) References cited:
- EP-A- 0 712 757
- EP-A- 1 247 693
- DE-A1- 10 330 887
- DE-C1- 19 909 142
- DE-U1- 29 809 713
- US-A1- 2002 030 372
- US-A1- 2004 094 984

## Description

### TECHNICAL FIELD

The present invention relates to load covers for road vehicle luggage compartments, for example to load covers operable to conceal luggage stored in such luggage compartments from sight

### BACKGROUND OF THE INVENTION

Road vehicle rear load compartment covers are known. For example, in a published European patent application EP1459936, there is described a rear load compartment cover operable to be of variable active length. The cover is implemented as a rigid shelf transversely extending in a longitudinal direction of a vehicle. The shelf includes a rigid plate having a first side thereof covered by a coating sheet of a flexible material. A flexible sealing band is employed to connect the shelf to an upper portion of a back seat of the vehicle. The band is provided with an extension to vary a working length of the coating sheet beyond the plate in a longitudinal direction. The shelf is operable to conceal contents stored therebeneath when a lower edge of a rear window on the vehicle extends upwardly from a height of the shelf.

Contemporary road vehicles are capable of providing their users with increased safety. Such improvements in safety are achieved by safety features, for example air bags and seat belts, as well as by improving a field of view for drivers of the vehicles. The field of view is improved, for example, by employing relatively larger windows with peripheral supporting pillars, for example A-pillars, being as narrow as possible consistent with ensuring that the vehicles have sufficient structural strength during impact events. In certain models of contemporary road vehicles, it is known to include rear windows which extend over a relatively larger portion of rear doors of the vehicles in order to improve driver visibility or for achieving a desired aesthetic effect Moreover, the field of vision can be further improved by providing a gap between rear seats of the vehicles so as provide a route by which drivers of the vehicles can view objects in close proximity to rear bumpers of the vehicles, for example for assisting when attempting reversing maneuvers. Moreover, such improvements render a known vehicle rear load compartment cover as elucidated in the foregoing inappropriate or unable to provide sufficient concealment of objects stored in the rear load compartment.

Thus, the present invention relates generally to automobile rear compartment covers, for example to compartment covers which are susceptible to providing drivers with an enhanced field of view but nevertheless are operable to conceal objects stored in associated rear compartments. The present invention is, for example, especially pertinent to hatch-back type road vehicles.

In contemporary road vehicles, for example in the aforementioned hatch-back type vehicles, it is desirable that objects placed in rear compartments of the vehicles be concealed from sight of people outside the vehicles for security reasons. The present invention relates, for example, to a technical problem of providing load covers intended to conceal rear compartments of hatch back type vehicles; such hatch-back type vehicles each have a rear window covering substantially an entire area of a hatch-back door of the vehicle, substantially down to a rear door sill thereof. The load cover of the invention is also directed at addressing a technical problem of providing concealment and localization of objects therebeneath in a situation where a rear compartment of a road vehicle is situated directly behind a row of seats thereof, for example where the seats of the row are mutually separated by one or more corresponding spaces therebetween; such one or more corresponding spaces are susceptible to enabling objects stored in an associated rear compartment to be inspected from outside the road vehicle.

Contemporary road vehicle rear compartment load covers often each comprise a cassette which is susceptible to being mounted to rear passenger seats. The cassette comprises a rolling blind which is wound in a casing of the cassette. Moreover, the rolling blind can be pulled out from the cassette and extended to cover an entire area of a rear compartment, namely an entire boot area. A torsion spring is often provided within the casing to keep the cover sheet tight when a free end of the sheet is withdrawn and engaged for deployment. These load covers are relatively bulky, and may create squeak and rattle problems in operation for their owners or users and require considerable space when not deployed. Additionally, in the case of a hatch-back road vehicle having a low-cut rear window, such rolling blinds pulled horizontally from the cassette mounted behind the rear passenger seat towards the hatch-back door, will leave a gap between the blind and a bottom portion of the low-cut rear window, thereby rendering objects stored in the rear compartment in full view from outside the vehicle.

A load cover having the features of the preamble of claim 1 is known from EP-A-1 247 693.

### SUMMARY OF THE INVENTION

An object of the present invention is to provide a road vehicle load cover of simple design, for example a load cover suitable for a small rear compartment of a road vehicle.

A further object of the invention is to provide a load cover adapted for hatch-back type road vehicles, for example:
(a) when such vehicles include associated low-set rear windows; and/or
(b) when such vehicles have associated rear compartments situated directly behind rear rows of seats of such vehicles, the seats being mutually separated by one or more spaces therebetween rendering objects stored in the rear compartments to be viewed from outside the vehicles.

Moreover, a further object of the invention is to provide a load cover which, in operation, is susceptible to generating reduced acoustic noise due to squeak and rattle, and which is susceptible to being easily stowed away in its associated road vehicle when not in use.

According to the invention, there is provided a load cover for a rear compartment of a vehicle as defined in claim 1, and a method of applying a load cover as defined in claim 14.

The invention is of advantage in that the load cover is capable of more effectively concealing contents of the rear compartment.

According to the invention, the load cover includes an upper cover sheet or panel, one auxiliary rear cover sheet or panel and one auxiliary front cover sheet or panel. This is especially beneficial when the vehicle has a low rear window and a space is provided between rear seats of the vehicle, the load cover in such case being effective at concealing objects or items included in the rear compartment.

Furthermore, according to the invention, the front and rear auxiliary cover sheets or panels are provided with fastening means for securing the front and rear auxiliary cover sheets or panels to the load floor of the rear compartment The fastening means is of benefit in that it is capable of ensuring that the load cover remains reliably in position when deployed and enhances its ability to retain items or objects in place within the rear compartment.

Preferably, in the load cover, one or more of the plurality of sheets or panels are fabricated from semi-rigid or rigid material. Use of such semi-rigid or rigid sheets or panels enables the load cover to better maintain its shape when deployed and also bear loads thereupon.

Preferably, in the load cover, one or more of said plurality of sheets or panels are fabricated from a flexible material for enabling the load cover to be rolled for storage when in said folded state. Use of such flexible material enables the load cover to occupy less volume when in the folded non-deployed state. More preferably, in the load cover, the flexible material is fabricated from one, or a combination of two or more, materials selected from a group of materials comprising poly-vinyl-chloride (PVC) plastics material, poly-ethylene plastics material, poly-propylene plastics material, nylon, poly-ester, poly-acrylate or poly-tetra-fluoro-ethane (PTFE).

Preferably, the load cover is implemented as a unitary plastics material molded item. Such a unitary implementation of the load cover is susceptible to rendering the load cover easier to manufacture in large volumes by injection molding processes or plastics material sheet forming processes.

Preferably, the load cover is implemented at least in part as a sewn fabric item. Such a sewn implementation is compatible with contemporary vehicle accessory fabrication methods rendering the load cover straightforward to manufacture. More preferably, in the load cover, one or more of the tubular members and semi-rigid or rigid sheets are sewn to be included within the fabric item.

Preferably, the load cover includes an upper cover sheet or panel and one auxiliary rear cover sheet or panel.

Preferably, in the load cover, the fastening means for securing the auxiliary cover sheets or panels to the load floor are hook devices coupled via flexible cords. Implementing the fastening means by way of hook devices attached to cords is found in practice convenient and easy for users to manipulate.

Preferably, in the load cover, extreme corners of the auxiliary cover sheets or panels are each provided with a strengthening bar coupled via flexible cords to a hook device.

Preferably, in the load cover, the fastening means for securing the auxiliary cover sheets or panels to the load floor of the rear compartment of the vehicle are adjustable in length for ensuring the auxiliary cover sheets or panels are rendered taught in use when the load cover is in the deployed state.

Preferably, in the load cover, the engaging means for securing the plurality of elongate members are expandable by virtue of associated resilient devices. Such expandability of the elongate members assists to ensure that they are more firmly retained in position in the rear compartment when the load cover is in its deployed state.

Preferably, in the load cover, the engaging means include knobs at each end of the elongate members molded or otherwise formed to fit in receptive depressions or holes situated on the side panels of the rear compartment of the vehicle. The knobs render the load cover easier for users to operate when installing it or removing it from the vehicle.

Preferably, in the load cover, the engaging means are tapered so as to include a widened flange adapted for receiving in operation user finger force when engaging into the receiving depressions or holes in the walls of the rear compartment of the vehicle.

A method of applying a load cover, according to the invention, is defined in claim 14. Preferred embodiments of this method are defined in claims 15 to 17.

According to the invention, there is also provided a road vehicle including a load cover as claimed in claim 1, the vehicle including a rear compartment with side walls, the side walls including receiving features for receiving engaging means of elongate members of the load cover, the vehicle also including a load floor in the rear compartment, the load floor being adapted to receive fastening means of the load cover for securing the load cover to the vehicle when in a deployed state.

### BRIEF DESCRIPTION OF THE DRAWINGS

Embodiments of the invention will now be described, by way of example only, with reference to the following drawings wherein:
- Figure 1: is an illustration of a road vehicle including a rear compartment provided with a load cover pursuant to the present invention;
- Figure 2: is a perspective view of a first embodiment of the load cover illustrated in Figure 1, the load cover including an upper cover panel and a rear cover panel;
- Figure 3: is a view of a tubular member with associated securing elements of the load cover illustrated in Figure 1;
- Figure 4: is a detailed view of one end of one of the expandable securing element illustrated in Figure 3 and its associated resilient device;
- Figure 5: is a perspective view of the securing element and its associated resilient device assembled together;
- Figure 6: is a perspective view of a second embodiment of the load cover illustrated in Figure 1, the load cover including the a front cover panel, an upper cover panel and a rear cover panel;
- Figure 7: is a perspective view of a hook device and associated cords employed to secure the load cover to the vehicle in Figure 1;
- Figure 8: is a perspective view of a bracket employed in conjunction with hook device of Figure 7 for securing the load cover,
- Figure 9: is a perspective view of a load cover pursuant to the present invention in a first storage position; and
- Figure 10: is a view of a load cover pursuant to the present invention, the load cover having been removed and rolled up.

### DETAILED DESCRIPTION OF PREFERRED EMBODIMENTS

The present invention relates generally to road vehicle rear compartment covers, namely automobile rear compartment covers. Such compartment covers are operable, for example, to conceal one or more objects or items stored within a rear compartment of a hatch-back type road vehicle.

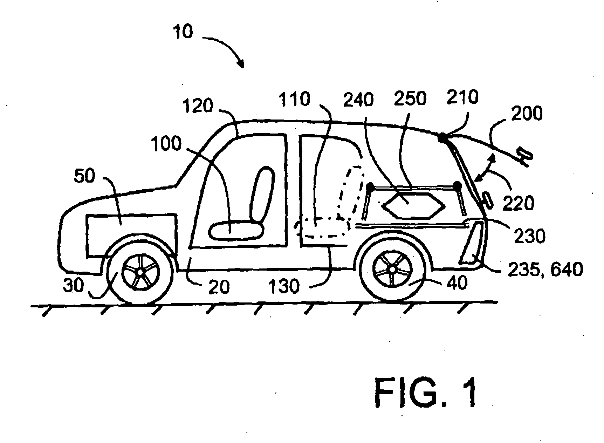

Referring to Figure 1, there is shown a hatch-back type vehicle indicated generally by 10. The vehicle 10 comprises a chassis 20, a set of front wheels 30, a set of rear wheels 40 and an engine 50 operative to provide motive power to at least the set of front wheels 30. Moreover, the vehicle 10 includes a front row of seats 100 and optionally a rear row of rear seats 110. Furthermore, the vehicle 10 includes at least a set of front doors 120 and optionally a set of rear doors 130. The vehicle 10 further comprises a hatch door 200 which is pivotally mounted at a hinge arrangement 210 to an upper region of the vehicle 10 at a rear region thereof. This hatch door 200 is susceptible to being opened by pivoting at the hinge arrangement 210 as denoted by an arrow 220. Beneficially, the hatch door 200 provides user-access to a rear compartment of the vehicle 10. The rear compartment is bordered by a load floor 230 and two side walls. The row of rear seats 110 is susceptible to being folded in a forward direction, the row of rear seats 110 when folded substantially upright being operable to form the front boundary of the rear compartment. A sill molding 235 surrounds the hatch door 200 for providing a rear boundary to the rear compartment. One or more objects or items 240 stored upon the load floor 230 are concealed by a load cover pursuant to the present invention; the load cover is denoted by 250 and will now be described in greater detail.

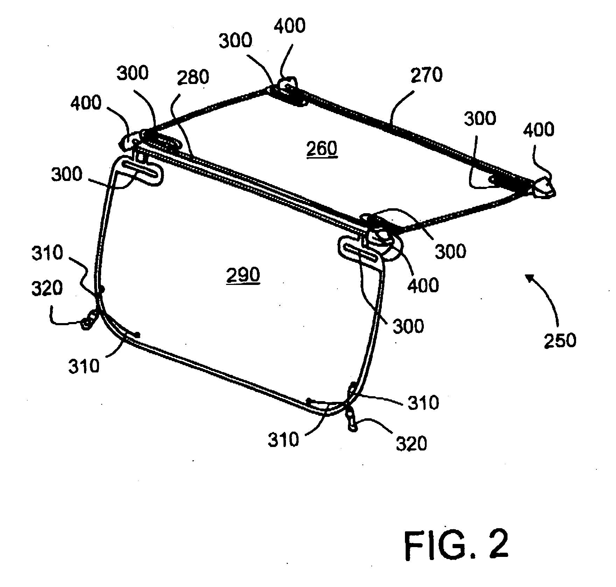

Referring to Figure 2, there is shown a first embodiment of the load cover 250- The load cover 250 comprises an upper cover sheet or panel 260 of substantially rectangular form including front and rear tubular members 270, 280 respectively. The tubular members 270, 280 extend across an entire width of the upper cover sheet or panel 260 as illustrated. When the load cover 250 is installed in the rear compartment of the vehicle 10, the front tubular member 270 extends along a front edge of the upper cover sheet or panel 260 disposed towards a front region of the rear compartment. Moreover, the rear tubular member 280 when installed extends substantially parallel to the front tubular member 270 and is disposed at a rear edge of the upper cover sheet or panel 260, Extending from the rear tubular member is a rear cover sheet or panel 290 as illustrated; the rear cover sheet or panel 290 optionally has rounded extreme corners, but is otherwise of substantially rectangular form. The upper cover sheet or panel 260 and the rear cover sheet or panel 290 are fabricated from any suitable substantially flexible material, for example from a foil comprising poly-vinyl-chloride (PVC) plastics material, from poly-ethylene plastics material or from poly-propylene plastics material. Other plastics materials are feasible to use, for example one or more of: nylon, poly-ester, poly-acrylate, poly-tetra-fluoro-ethane (PTFE) and similar. Optionally, the cover sheets or panels 260, 290 can be fabricated from a semi-stiff or stiff material. More optionally, the cover sheets or panels 260, 290 can be provided with peripheral strengthening features whereat the cover sheets or panels 260, 290 are most vulnerable to wear or damage in operation. The upper cover sheet or panel 260 is provided with four stiffening portions 300 at corners thereof adjacent to the front and rear tubular members 270, 280, and the rear cover sheet or panel 290 is provided with two such stiffening portions 300 at upper corners thereof adjacent the rear tubular member 260. Beneficially, the aforesaid extreme corners of the rear cover sheet or panel 290 are each provided with a strengthening bar (not shown in Figure 2) coupled via flexible cords 310 to a hook device 320 which is susceptible to being clipped into holes or similar receiving features provided in relation to the load floor 230.

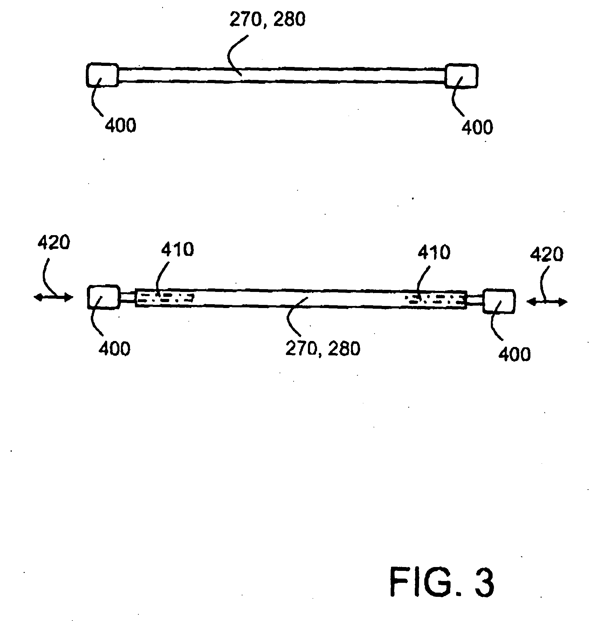

The tubular members 270, 280 each comprise two supportive securing elements 400 at extreme ends thereof as illustrated in Figure 3. In a first implementation shown above in Figure 3, the supportive securing elements 400 are implemented as two knobs secured to extreme ends of the tubular members 270, 280; the knobs are in fixed relationship in respect of their corresponding tubular members 270, 280. In a second implementation shown below in Figure 3, the supportive securing elements 400 are coupled via coaxial elastically resilient devices 410 included at least partially within the tubular members 270, 280 so that the securing elements 400 can be pushed axially towards their associated members 270, 280 by applying finger pressure, for example an axial force having a magnitude in a range of 1 to 10 Newtons.

The tubular members 270, 280 are conveniently implemented as metal bars of hollow tubular profile so as to provide high strength in combination with relatively low weight; optionally, the tubular members 270, 280 are fabricated from hollow steel tubes. The protruding knobs forming the supportive securing elements 400 are operable when the cover 250 is deployed to be fastened into receptive depressions or holes situated on the inside walls of the rear compartment of the vehicle 10. As elucidated earlier, the rear cover sheet or panel 290 is conveniently secured in use when installed in the rear compartment by the aforesaid hook device 320.

The knobs at each end of the tubular members 270, 280 are molded or otherwise formed to fit in receptive depressions or holes situated on the side panels of the rear compartment of the vehicle 10. The receptive depressions or holes are positioned at any optional height on the inside walls of the rear compartment. Preferably, they are positioned just below side windows associated with the rear compartment to provide a cargo space which is as high as possible in a vertical direction. The depressions or holes are disposed in a longitudinal direction on the inside side walls of the rear compartment so as to keep the upper cover panel or sheet 260 in an optimally taught position and provide a cargo space which is as large as possible in the longitudinal direction of the vehicle 10.

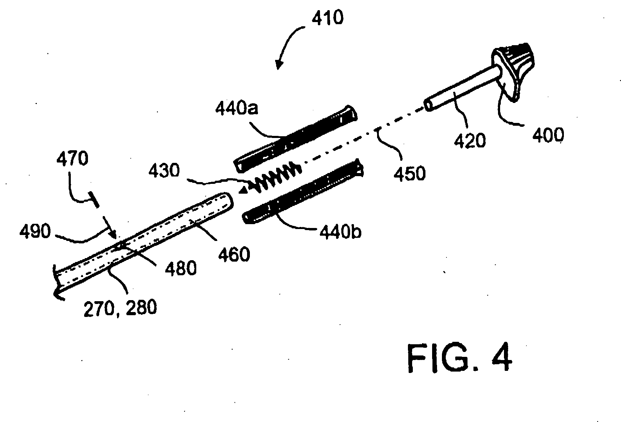

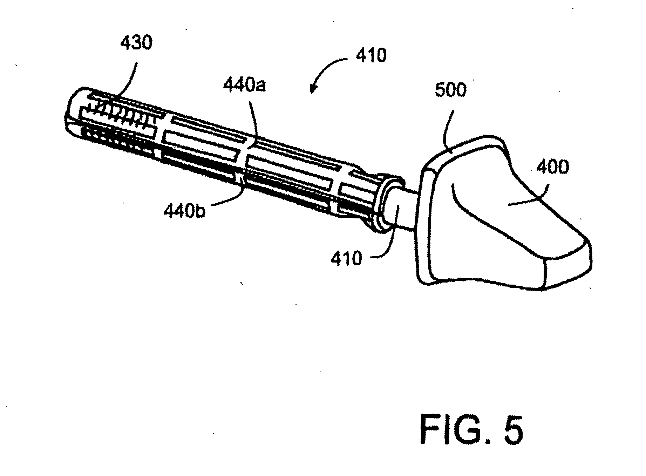

Optionally, as depicted in Figure 3, the supportive securing elements 400 can be expandable by virtue of their resilient devices 410 to enhance the fastening strength of the load cover 250 when in situ engaged into the aforementioned depressions or holes. In Figure 4, there is shown one of the securing elements 400 with its associated resilient device 410. The securing element 400, for example implemented as a plastics material molded knob, is provided with an elongate shaft 420 as illustrated. Moreover, the resilient device 410 further comprises a coil spring 430 and two mutually complementary portions 440a, 440b of a slider bearing 440. The portions 440a, 440b of the slider bearing 440 can be fabricated from plastics material or, alternatively, fabricated from punched or etched metal sheet which has been appropriately shaped by a pressing process. The elongate shaft 420 together with its spring 430 and its slider bearing 440 are susceptible to being coaxially assembled in respect of a longitudinal axis 450 into a hollow region 460 provided at the end of its associated tubular member 270, 280. When the device 410 is assembled within the hollow region 460, the device 410 is secured into position by way of a retaining pin 470 forced through a hole 480 formed in a side of the tubular member 270, 280, such that the pin 470 is operable to retain the slider bearing 440 and an end of the spring 430 in position within the associated tubular member 270, 280. Beneficially, the elongate shaft 420 is attached, molded or otherwise retained onto a free end of the spring 430 as illustrated. The securing element 400 assembled together with its device 410 is shown in Figure 5; optionally, the securing element 400 is implemented in substantially tapered form as illustrated so as to include a widened flange 500 adapted to receive in operation user finger force but nevertheless be effective at engaging into the aforementioned receiving depressions or holes in the walls of the rear compartment of the vehicle 10.

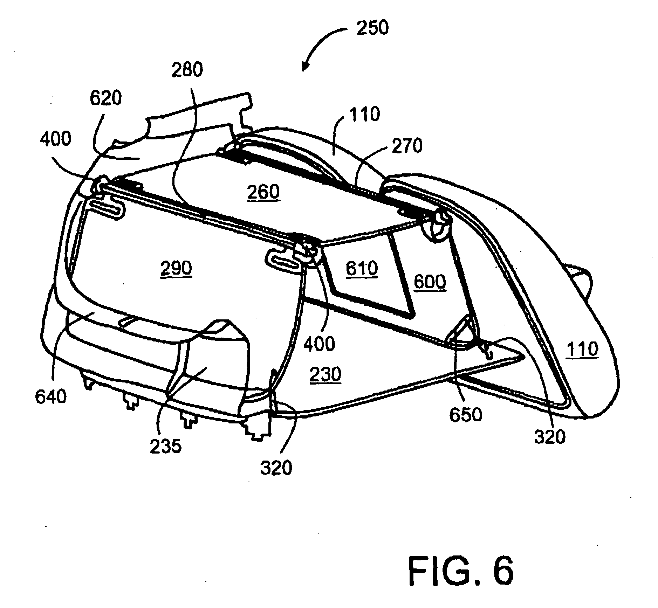

Referring next to Figure 6, an implementation of the load cover 250 is shown wherein an additional forward cover sheet or panel 600 is included to conceal the objects or items 240 from view when the row of rear seats 110 of the vehicle 10 are provided with a gap therebetween, or when the row of rear seats 110 are absent. The forward cover sheet or panel 600 is of generally similar construction to the rear cover sheet or panel 290; however, the forward cover sheet or panel 600 is pivotally mounted substantially along the forward tubular member 270 as illustrated. Optionally, the forward cover sheet or panel 600 is provided with a pocket feature 610 for accommodating items such as a road atlas and an instruction manual for the vehicle 10. In Figure 6, the aforesaid left side wall of the rear compartment is denoted by 620, and the aforementioned rear sill and its associated upper flange are denoted by 235, 640 respectively; there is included in the vehicle 10 a right side wall which is not shown in Figure 6 for clarity. The aforementioned strengthening bar is denoted by 650 for providing for a more robust retention of the hook device 320 to the forward cover sheet or panel 600. Optionally, the strengthening bar 650 is included in respective of all hook devices 320 included in the load cover 250.

As elucidated in the foregoing, the hook devices 320 are included a extreme corners of the rear cover sheet or panel 290 and at extreme corners of the front cover sheet or panel 600 attachable substantially at corners of the load floor 230. The flexible cords 310, for example each implemented as a rubber band or elastic strap, are optionally operable to be adjustable in length for ensuring that one or more of the rear cover sheet or panel 290 and the forward cover sheet or panel 600 are rendered taught in use. Optionally, the forward cover sheet or panel 600 is kept in a tensioned state, thereby more effectively concealing the objects or items 240 stored in the rear compartment from outside inspection.

In the rear compartment, namely cargo space, of the road vehicle 10 implemented as a hatch-back, the load cover 250 is, when in use, positioned directly behind the back row of seats 110, extending laterally across the full width between the opposing walls 620 of the rear compartment, and in the longitudinal direction of the vehicle 10, from behind the back row of seats 110 to the sill 235 and its associated flange 640 or hatch-back door 200 of the vehicle 10, protecting the entire rear compartment from outside view. The load cover 250 is held in a fixed position in the rear compartment by the tubular members 270, 280 and associated supportive securing elements 400 and optional associated resilient devices 410. The load cover 250 of the present invention can be assembled into the rear compartment by executing a few simple steps including:
(a) lifting the forward tubular member 270 upwardly, substantially parallel to the rear row of seats 110, and substantially perpendicular to the side walls 620 of the rear compartment;
(b) tensioning material of the front cover sheet or panel 600:
(c) fastening both of the securing elements 400 located at extreme ends of the front tubular member 270 into corresponding receptive depressions or holes of the side walls 620;
(d) installing in a similar manner the rear tubular member 280 into the side walls 620; and
(e) deploying and then tensioning the rear cover sheet or panel 290 by way of attaching its hook devices 320 into holes or similar features included in the load floor 230.

The securing elements 400, for example knobs, at each end of the tubular members 270, 280 are fitted into the aforementioned receptive depressions or holes disposed at each side wall 620 inside the rear compartment of the vehicle 10. In one example embodiment of the present invention, the tubular members 270, 280 and their associated securing elements 400 are expandable in order to enhance the fastening strength of the load cover 250 within the vehicle 10.

The expandable front tubular member 270 of the load cover 250 is installed into position horizontally between the side walls 620 in the rear compartment by simultaneously exerting a longitudinal pressure directed along an elongate axis of the tubular member 270 on both of the securing elements 400 with associated resilient devices 410, whereby the coil springs 430 are compressed inside their respective slider bearing assembly 440, shortening the effective length of the expandable tubular member 270 and its associated securing elements. The securing elements 400 are positioned in the receptive depressions or holes in, for example, a plastics material part of the side walls 620 inside the rear compartment of the vehicle 10. When the longitudinal pressure applied to the securing elements 400 directed into the tubular member 270 is released, each compressible coil spring 430 becomes extended and then exerts its longitudinal pressure in the opposite direction out from the tubular member 270 towards the side walls 620 of the vehicle 10, thereby keeping the supportive securing elements 400 in place in the side walls 620.

The rear tubular member 280 and its associated supportive securing elements 400 and resilient devices 410 are fastened in the rear receptacle depressions holes in a similar manner as described above for the front tubular member 270. Securing both of the tubular members 270, 280 into corresponding receiving depression or holes in the side walls 620 of the rear compartment is capable of ensuring that the upper cover sheet or panel 260 is tensioned, when not fabricated from rigid material for example, between the two tubular members 270, 280. The rear cover panel 290 can then be unfolded downwards and the hook devices 320 attached to the far corners of the load floor 230 to secure the load cover 250 to the vehicle 10.

One embodiment of the present invention is advantageously used when the rear compartment is situated directly behind the rear row of seats 110, where the seats of the row 110 are separated by a space therebetween which allows an inside region of the rear compartment to be viewed or inspected through the space from outside the vehicle 10 as in Figure 6. In this embodiment, the two hollow tubular members 270, 280 are operable to define the load cover 250 to include three regions; one front cover sheet or panel 600, one upper cover sheet or panel 260 and one rear cover sheet or panel 290. The front hollow tubular member 270 allows the front cover sheet or panel 600 to be moved in a pivotal manner with regard to the upper cover panel 260 as elucidated in the foregoing. When the front cover sheet or panel 600 is folded forward and downwards in a direction towards the front of the vehicle 10, the front cover sheet or panel 600 conceals the rear compartment from sight between the seats 110. The front cover panel 600 is fitted with two associated hook devices 320 for tensioning the front cover sheet or panel 600 to the far corners of the load floor 230. Optionally, as elucidated earlier, the forward cover sheet or panel 600 can include a storage pocket 610 on a face of the front cover 600 facing into the rear compartment. In the embodiment where the load cover 250 comprises the front cover sheet or panel 600, the load cover 250 is susceptible to being installed into the vehicle 10 by implementing the following steps:
(a) fastening the hook devices 320 of the front cover sheet or panel 600 onto the load floor 230;
(b) lifting the forward tubular member 270 upwardly, substantially parallel to the rear row of seats 110, and substantially perpendicular to the side walls 620 of the rear compartment, thereby tensioning material of the front cover sheet or panel 600;
(c) fastening both of the securing elements 400 included at extreme ends of the front tubular member 270 into corresponding receiving depressions or holes of the side walls 620;
(d) installing in a similar manner as in steps (b) and (c) the rear tubular member 280 into corresponding receiving depression or holes included in the side walls 620; and
(f) deploying and then tensioning the rear cover sheet or panel 290 by way of attaching its hook devices 320 onto the load floor 230.

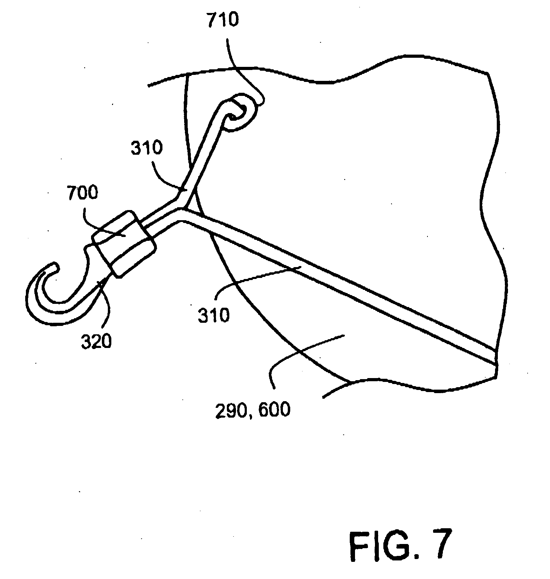

Referring to Figure 7, the hook device 320 and its associated cords 310 are illustrated in greater detail. The cords 310 are received into the cover sheets or panels 260, 290 by way of holes formed therein, each hole optionally being provided with a stress reliever 710. The stress reliever 710 can optionally be implemented as a plastics material molded component which is a press fit into the holes provided on the cover sheets or panels 260, 290. The hook device 320 includes a cord receiving portion 700 into which flared or knotted ends of the cord 310 are firmly retained. Alternatively, the hook device 320 together with its cord receiving portion 700 can be molded onto the cords 310 and are thereby integral therewith.

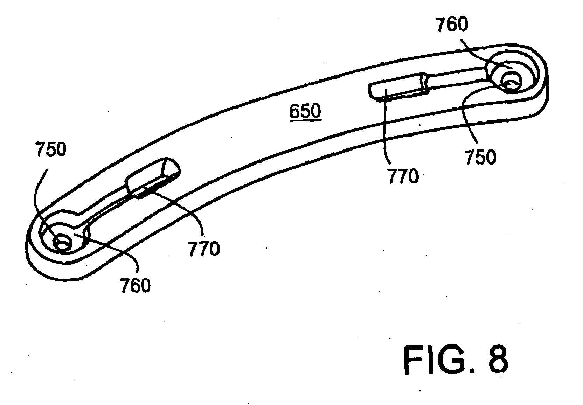

Referring to Figure 8, the aforementioned bracket 650 is shown in greater detail. The bracket 650 can either be implemented in a curved or in a straight form. Moreover, the bracket 650 is beneficially a plastics material molded component. Holes 750 are included substantially at extreme ends of the bracket 650. Each hole 750 widens out in a stepwise manner to provide a flange 760 for receiving a knotted or splayed-out end of its associated cord 310. Inwardly along from the extreme ends are two slots 770 for receiving corresponding fasteners, for example rivets, for securing the bracket 650 to its associated cover sheet or panel 260, 290.

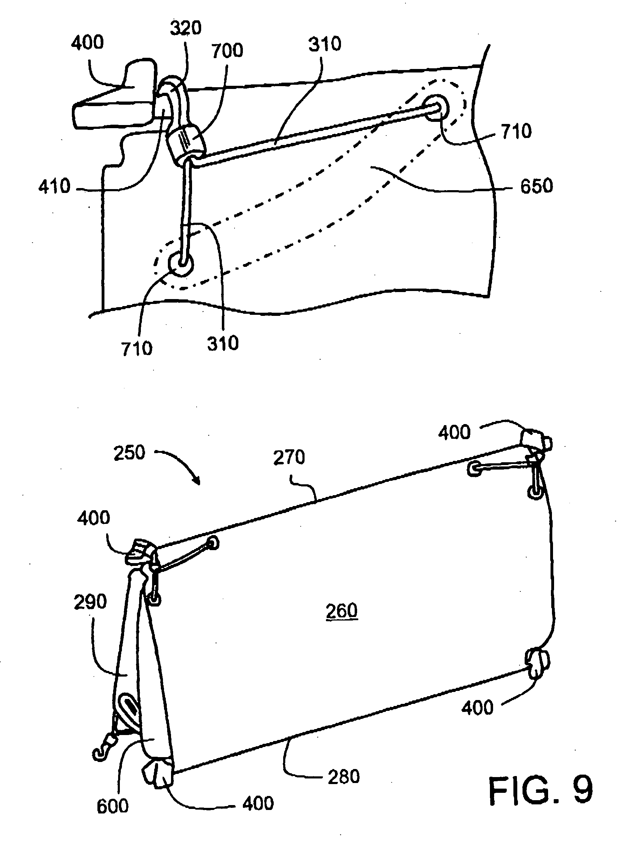

In the situation in which the rear compartment of the vehicle 10 is to be loaded with luggage or similar items which are too big and bulky to fit under the load cover 250, there is an option to store the load cover 250 in a folded parked state directly behind the rear row of seats 110; the flexible cover 250 adjusted to its folded state is depicted in Figure 9. Conveniently, the hook devices 320 are susceptible to be dip engaged onto the elongate shafts 420 as depicted in an upper portion of Figure 9 when the load cover 250 is in its folded parked state. When adjusting the load cover 250 to its folded parked state, a series of steps are executed:
(a) unfastening the rear cover sheet or panel 290 from the load floor 230;
(b) releasing the rear tubular member 260 by applying a simultaneous longitudinal force to both of its securing elements 400, the applied force being directed inwardly towards a centre of the rear tubular member 280, whereby the coil springs 430 of the tubular member 280 are compressed inside their respective slider bearings 440; whilst maintaining the inwardly directed force, lifting the rear tubular member 280 away from corresponding receiving depressions or holes in the side walls 620 of the rear compartment and then subsequently releasing the applied force;
(c) placing the released rear tubular member 280 on the load floor 230 of the rear compartment; whereby the top cover sheet or panel 260 can be user-pivoted downwards to be handled freely such that it is secured only by way of the front tubular element 270; the outside part of the top cover sheet or panel 260 is now facing towards a rear end of the rear compartment; and
(d) to secure the load cover 250 into its folded parked state, folding the rear cover sheet or panel 290 upwards in front of the upper cover or sheet 260 outside, and attaching the hook devices 320 to far corners of the rear cover panel 290 onto the elongate shafts 420 as depicted in Figure 9.

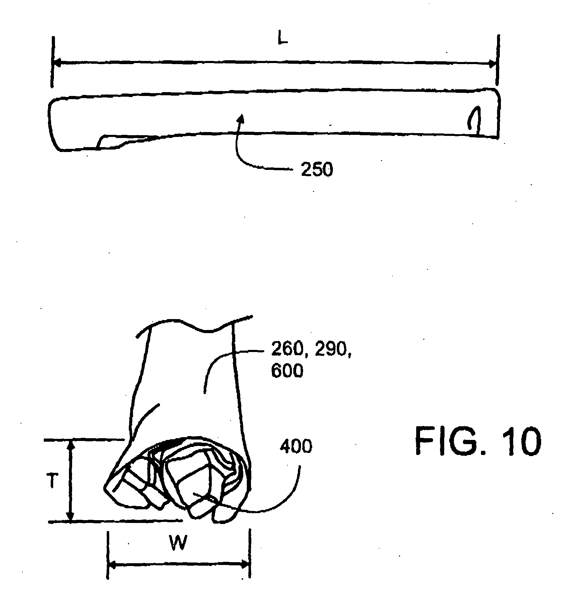

When the entire capacity of the rear compartment within the vehicle 10 is required, whereby the row of rear seats 110 have to be folded down, the load cover 250 of the invention can be easily dismounted and folded, requiring a modest space for storage. When the front cover sheet or panel 600, the upper cover sheet or panel 260 and the rear cover sheet or panel 290 are fabricated from non-rigid material, the load cover 250 can be rolled up as depicted in Figure 10. The rolled-up load cover 250 can easily be stored inside the rear compartment of the vehicle 10; its length L, its width W and its thickness T are then, for example, substantially 1 m, 10 cm and 15 cm respectively.

Although suitable material for fabricating the load cover 250 have been elucidated in the foregoing, it will be appreciated that parts of the load cover 250 can be assembled together in several alternative ways. One or more of the panels or sheets 260, 290, 600 of the load cover 250 can be fabricated to be flexible so as to be susceptible to being rolled up when not deployed as illustrated in Figure 10. Alternatively, one or more of the panels or sheets 260, 290, 600 can be fabricated to be semi-rigid or rigid so that the load cover 250 is susceptible to being folded into a planar form when not deployed. It is also feasible to fabricate the load cover 250 so that certain of its cover sheets or panels 260, 290, 600 are semi-rigid or rigid, and others are flexible; for example the upper cover sheet or panel 260 can be implemented to be semi-rigid or rigid so as to be susceptible to bearing a load placed thereupon, whereas at least one of the forward and rear cover sheets or panels 290, 600 can be optionally implemented so as to be flexible.

When the cover sheets or panels 260, 290, 600 are to be implemented in semi-rigid or rigid form, they can comprise a sheet of semi-rigid or rigid material sewn into flexible woven fabric; the woven fabric can in turn, be attached to the tubular members 270, 280, for example the tubular members 270, 280 can similarly be sewn into the fabric. Alternatively, when the cover sheets or panels 260, 290, 600 are to be semi-rigid or rigid, they can be implemented as bare sheets of semi-rigid or rigid material which are coupled at their appropriate peripheral edges via flexible transverse flexible fabric strip to corresponding one or more of the tubular members 270, 280. Yet alternatively, when the cover sheets or panels 260, 290, 600 are to be semi-rigid or rigid, they can be coupled to their corresponding one or more of the tubular members 270, 280 by way of mechanical hinges, for example flexible plastics material molded hinges.

Yet further implementations of the load cover 250 are feasible. For example, it can be fabricated as a unitary plastics molded component provided with integral flexible hinge features so that the rear cover sheet or panel 290 and/or the forward cover sheet or panel 600 is operable to pivot in respect of the upper cover sheet or panel 260. Even the securing elements 400 are susceptible to being integrally molded into the load cover 250 and rendered resilient by way of flexible molded members coupling the securing elements 400 to a main portion of the load cover 250, the flexible members providing the securing elements 400 with elastic resilience to deflect in response to user finder force applied thereto when installing the load cover 250 so implemented into the vehicle 10 or removing it therefrom.

If required, one or more of the cover sheets or panels 260, 290, 600 can be implemented as a form of netting which is sufficiently opaque to hide the items or objects 240 included in the rear compartment.

It will be appreciated that modifications to embodiments of the invention described in the foregoing are possible without departing from the scope of the invention as defined by the accompanying claims.

Reference numerals included within parentheses in the accompanying claims are intended to assist understanding of the subject matter claimed in the claims, and are not to be construed to be limiting the scope of the claims. Reference to the singular is also to be construed to relate to the plural.

Terms used in describing and claiming the present invention such as "include", "comprise", "consist of", "have", "are", "incorporate", are to be construed in a non-exclusive manner, namely to allow for other parts or components to be present which are not explicitly indicated.

## Claims

1. A load cover (250) for a rear compartment of a vehicle (10), said rear compartment being laterally defined by associated side walls (620) and having a load floor (230), said load cover (250) being operable to be in a folded state or in a deployed state, and said cover (250) when in the deployed state being operable to substantially conceal from external view contents of said rear compartment, wherein
a) said load cover (250) when in said deployed state in said vehicle (10), includes a plurality of cover sheets or panels (260, 290, 600), each cover sheet or panel (260, 290, 600) having an associated substantially planar surface, such that said planar surfaces of said plurality of sheets or panels (260, 290, 600) are mutually non-parallel when in said deployed state; and
b) said load cover (250) includes a plurality of elongate members (270, 280) for defining said plurality of sheets or panels (260, 290, 600), said plurality of elongate members (270, 280) each being provided with engaging means (400, 410, 420, 430, 440) for securing said plurality of elongate members (270, 280) to receiving features in said walls (620) of said rear compartment, thereby enabling said load cover (250) to be secured to said vehicle (10) in the deployed state,
**characterized in**
c) **that** said load cover (250) includes an upper cover sheet or panel (260), one auxiliary rear cover sheet or panel (290) and one auxiliary front cover sheet or panel (600), the auxiliary cover sheets or panels (290, 600) being arranged so as to, in the deployed state, extend from the upper cover sheet or panel (260) towards the load floor (230) of the rear compartment, such that the cover sheets or panels (260, 290, 600) cooperate to substantially conceal from external view said contents of the rear compartment, and
d) said front and rear auxiliary cover sheets or panels (290, 600) being provided with fastening means for securing said front and rear auxiliary cover sheets or panels (290, 600) to said load floor (230) of said rear compartment.

2. A load cover (250) as claimed in claim 1, wherein one or more of said plurality of sheets or panels (260, 290, 600) are fabricated from semi-rigid or rigid material.

3. A load cover (250) as claimed in claim 1, wherein one or more of said plurality of sheets or panels (260, 290, 600) are fabricated from a flexible material for enabling the load cover (250) to be rolled for storage when in said folded state.

4. A load cover (250) as claimed in claim 3, wherein said flexible material is fabricated from one, or a combination of two or more, materials selected from a group of materials comprising poly-vinyl-chloride (PVC) plastics material, poly-ethylene plastics material, poly-propylene plastics material, nylon, poly-ester, poly-acrylate or poly-tetra-fluoro-ethane (PTFE).

5. A load cover (250) as claimed in claim 1, wherein the load cover (250) is implemented as a unitary plastics material molded item.

6. A load cover (250) as claimed in claim 1, wherein the load cover (250) is implemented at least in part as a sewn fabric item.

7. A load cover (250) as claimed in claim 6, wherein one or more of the elongate members (270, 280) and semi-rigid or rigid sheets are sewn to be included within the fabric item.

8. A load cover (250) as claimed in any preceding claims, wherein the fastening means for securing the auxiliary cover sheets or panels (290, 600) to a load floor (230) are hook devices (320) coupled via flexible cords (310).

9. A load cover (250) as claimed in one or more of the preceding claims, wherein extreme corners of the auxiliary cover sheets or panels (290, 600) are each provided with a strengthening bar (650) coupled via flexible cords (310) to a hook device (320).

10. A load cover (250) as claimed in claim 8, wherein the fastening means for securing the auxiliary cover sheets or panels (290, 600) to the load floor (230) of said rear compartment of said vehicle (10) are adjustable in length for ensuring said auxiliary cover sheets or panels are rendered taught in use when said load, cover (250) is in said deployed state.

11. A load cover (250) as claimed in one or more of the preceding claims, wherein the engaging means (400, 410, 420, 430, 440) for securing said plurality of elongate members (270, 280) are expandable by virtue of associated resilient devices (410).

12. A load cover (250) as claimed in one or more of the preceding claims, wherein the engaging means (400, 410, 420, 430, 440) include knobs at each end of the elongate members (270, 280) molded or otherwise formed to fit in receptive depressions or holes situated on the side panels of the rear compartment of the vehicle (10).

13. A load cover (250) as claimed in one or more of the preceding claims, wherein the engaging means (400, 410, 420, 430, 440) are tapered so as to include a widened flange (500) adapted for receiving in operation user finger force when engaging into the receiving depressions or holes in the said walls of the rear compartment of the vehicle (10).

14. A method of applying a load cover (250), said load cover (250) being as claimed in claim 1, for concealing items stored in a rear compartment of a vehicle (10), said rear compartment being laterally defined by associated side walls (620) and having a load floor (230), said method comprising steps of:
(a) lifting the forward elongate member (270) of said cover (250) upwardly, substantially parallel to a rear row of seats of said vehicle (10), and substantially perpendicular to the side walls (620) of said rear compartment;
(b) tensioning the material of the front cover sheet or panel (600) of said cover (250);
(c) fastening both of the engaging means (400) disposed at extreme ends of said forward elongate member (270) into the receiving features of the side walls (620) of said rear compartment;
(d) installing in a similar manner the rear elongate member (280) into said side walls (620); and
(e) deploying and then tensioning the rear cover sheet or panel (290) of said load cover (250) by attaching its fastening means (320) into the load floor (230) of said rear compartment.

15. The method of applying a load cover (250) as claimed in claim 14, said load cover (250) being as claimed in claim 1, for concealing items (240) stored in a rear compartment of a vehicle (10), said method comprises the initial step of:
(-) fastening said fastening means (320) of a front cover sheet or panel (600) of said load cover (250) onto a load floor (230) of said rear compartment;
followed by the steps (a) to (e) of claim 14.

16. The method of applying the load cover (250) as claimed in claim 14 or 15, wherein the engaging means (400) are operable to be fastened by resilient devices (410) into the receiving features of the side walls (620).

17. The method of applying a load cover (250) as claimed in claim 16, wherein the resilient devices (410) are installed into the receiving features of the side walls (620) by steps of;
(a) simultaneously exerting a longitudinal pressure directed along an elongate axis of said forward elongate member (270) on both of its engaging means (400) with associated resilient devices (410), thereby shortening the effective length of said forward elongate member (260) and its associated engaging means (400); and
(b) positioning the engaging means (400) in the receiving features in the side panels (620) inside the rear compartment of the vehicle (10); and
(c) releasing the longitudinal pressure applied to the engaging means (400) directed into the elongate member (270), thereby keeping the supportive securing elements (400) in place in the side walls (620).

18. A road vehicle (10) including a load cover (250) as claimed in claim 1, said vehicle (10) including a rear compartment with side walls (620), said side walls (620) including receiving features for receiving engaging means (400, 410) of elongate members (270, 280) of said load cover (250), said vehicle (10) also including a load floor (230) in said rear compartment, said load floor (230) being adapted to receive fastening means (310, 320) of said load cover (250) for securing said load cover (250) to said vehicle (10) when in a deployed state.

## Patentansprüche

1. Gepäckabdeckung (250) für ein hinteres Abteil eines Fahrzeugs (10), wobei das hintere Abteil seitlich durch zugeordnete Seitenwände (620) definiert ist und einen Gepäckboden (230) besitzt, wobei die Gepäckabdeckung (250) in einen zusammengefalteten Zustand oder in einen entfalteten Zustand betätigbar ist, wobei die Abdeckung (250) dann, wenn sie im entfalteten Zustand ist, verwendbar ist, um Inhalte des hinteren Abteils vor äußeren Blicken im Wesentlichen zu verbergen, wobei
a) die Gepäckabdeckung (250) dann, wenn sie im entfalteten Zustand in dem Fahrzeug (10) ist, mehrere Abdecklagen oder -platten (260, 290, 600) aufweist, wobei jede Abdecklage oder -platte (260, 290, 600) eine zugeordnete im Wesentlichen ebene Oberfläche besitzt, derart, dass die ebenen Oberflächen der mehreren Lagen oder Platten (260, 290, 600) im entfalteten Zustand zueinander nicht parallel sind; und
b) die Gepäckabdeckung (250) mehrere lang gestreckte Elemente (270, 280) aufweist, um die mehreren Lagen oder Platten (260, 290, 600) zu definieren, wobei die mehreren lang gestreckten Elemente (270, 280) jeweils mit Eingriffmitteln (400, 410, 420, 430, 440) versehen sind, um die mehreren lang gestreckten Elemente (270, 280) an Aufnahmemerkmalen in den Wänden (620) des hinteren Abteils zu befestigen, um dadurch die Befestigung der Gepäckabdeckung (250) an dem Fahrzeug (10) im entfalteten Zustand zu ermöglichen,
**dadurch gekennzeichnet,**
c) **dass** die Gepäckabdeckung (250) eine obere Abdecklage oder -platte (260), eine hintere Hilfsabdecklage oder -platte (290) und eine vordere Hilfsabdecklage oder -platte (600) aufweist, wobei die Hilfsabdecklagen oder -platten (290, 600) so beschaffen sind, dass sie sich im entfalteten Zustand von der oberen Abdecklage oder -platte (260) zum Gepäckboden (230) des hinteren Abteils erstrecken, so dass die Abdecklagen oder -platten (260, 290, 600) zusammenwirken, um die Inhalte des hinteren Abteils vor äußeren Blicken im Wesentlichen zu verbergen, und
d) **dass** die vorderen und hinteren Hilfsabdecklagen oder -platten (290, 600) mit Befestigungsmitteln versehen sind, um die vorderen und hinteren Hilfsabdecklagen oder -platten (290, 600) am Gepäckboden (230) des hinteren Abteils zu befestigen.

2. Gepäckabdeckung (250) nach Anspruch 1, wobei eine oder mehrere der mehreren Lagen oder Platten (260, 290, 600) aus einem halbstarren oder einem starren Material hergestellt sind.

3. Gepäckabdeckung (250) nach Anspruch 1, wobei eine oder mehrere der mehreren Lagen oder Platten (260, 290, 600) aus einem flexiblen Material hergestellt sind, um zu ermöglichen, die Gepäckabdeckung (250) für die Aufbewahrung aufzurollen, wenn sie im zusammengefalteten Zustand ist.

4. Gepäckabdeckung (250) nach Anspruch 3, wobei das flexible Material aus einem oder aus einer Kombination aus zwei oder mehreren Materialien hergestellt ist, die aus einer Gruppe von Materialien gewählt sind, die umfasst: Polyvinylchlorid (PVC), Kunststoff, Polyethylen-Kunststoff, Polypropylen-Kunststoff, Nylon, Polyester, Polyacrylat oder Polytetrafluorethan (PTFE).

5. Gepäckabdeckung (250) nach Anspruch 1, wobei die Gepäckabdeckung (250) als ein einteiliges Element, das aus Kunststoff gegossen ist, verwirklicht ist.

6. Gepäckabdeckung (250) nach Anspruch 1, wobei die Gepäckabdeckung (250) wenigstens teilweise aus einem genähten Textilelement verwirklicht ist.

7. Gepäckabdeckung (250) nach Anspruch 6, wobei eines oder mehrere der lang gestreckten Elemente (270, 280) und eine oder mehrere der halbstarren oder starren Lagen vernäht sind, um in dem Textilelement enthalten zu sein.

8. Gepäckabdeckung (250) nach einem der vorhergehenden Ansprüche, wobei die Befestigungsmittel zum Befestigen der Hilfsabdecklagen oder -platten (290, 600) an einem Gepäckboden (230) Hakenvorrichtungen (320) sind, die über flexible Schnüre (310) gekoppelt sind.

9. Gepäckabdeckung (250) nach einem oder mehreren der vorhergehenden Ansprüche, wobei äußere Ecken der Hilfsabdecklagen oder -platten (290, 600) jeweils mit einem Verstärkungsstab (650) versehen sind, der über flexible Schnüre (310) mit einer Hakenvorrichtung (320) gekoppelt ist.

10. Gepäckabdeckung (250) nach Anspruch 8, wobei die Befestigungsmittel zum Befestigen der Hilfsabdecklagen oder -platten (290, 600) am Gepäckboden (230) des hinteren Abteils des Fahrzeugs (10) in der Länge einstellbar sind, um sicherzustellen, dass die Hilfsabdecklagen oder -platten im Gebrauch gespannt gehalten werden, wenn sich die Gepäckabdeckung (250) im entfalteten Zustand befindet.

11. Gepäckabdeckung (250) nach einem oder mehreren der vorhergehenden Ansprüche, wobei die Eingriffmittel (400, 410, 420, 430, 440) zum Befestigen der mehreren lang gestreckten Elemente (270, 280) kraft zugeordneter elastischer Vorrichtungen (410) dehnbar sind.

12. Gepäckabdeckung (250) nach einem oder mehreren der vorhergehenden Ansprüche, wobei die Eingriffmittel (400, 410, 420, 430, 440) an jedem Ende der lang gestreckten Elemente (270, 280) Knöpfe aufweisen, die gegossen oder auf andere Weise geformt sind, um in jeweilige Vertiefungen oder Löcher eingesetzt zu werden, die sich in den Seitenplatten des hinteren Abteils des Fahrzeugs (10) befinden.

13. Gepäckabdeckung (250) nach einem oder mehreren der vorhergehenden Ansprüche, wobei die Eingriffmittel (400, 410, 420, 430, 440) konisch zulaufen, um einen erweiterten Flansch (500) zu enthalten, der dazu ausgelegt ist, im Betrieb die Kraft des Fingers eines Benutzers aufzunehmen, wenn sie in den Aufnahmevertiefungen oder -löchern in den Wänden des hinteren Abteils des Fahrzeugs (10) in Eingriff sind.

14. Verfahren zum Anbringen einer Gepäckabdeckung (250), wobei die Gepäckabdeckung (250) wie in Anspruch 1 beansprucht beschaffen ist, um Elemente, die in einem hinteren Abteil eines Fahrzeugs (10) gelagert sind, zu verbergen, wobei das hintere Abteil seitlich durch zugeordnete Seitenwände (620) definiert ist und einen Gepäckboden (230) besitzt, wobei das Verfahren die folgenden Schritte umfasst:
(a) Anheben des vorderen lang gestreckten Elements (270) der Abdeckung (250) nach oben im Wesentlichen parallel zu einer hinteren Reihe von Sitzen des Fahrzeugs (10) und im Wesentlichen senkrecht zu den Seitenwänden (620) des hinteren Abteils;
(b) Spannen des Materials der vorderen Abdecklage oder -platte (600) der Abdeckung (250);
(c) Befestigen der beiden Eingriffmittel (400), die an den äußeren Enden des vorderen lang gestreckten Elements (270) angeordnet sind, in den Aufnahmemerkmalen der Seitenwände (620) des hinteren Abteils;
(d) Installieren des hinteren lang gestreckten Elements (280) auf ähnliche Weise in den Seitenwänden (620); und
(e) Ausklappen und dann Spannen der hinteren Abdecklage oder -platte (290) der Gepäckabdeckung (250) durch Befestigen ihrer Befestigungsmittel (320) im Gepäckboden (230) des hinteren Abteils.

15. Verfahren zum Anbringen einer Gepäckabdeckung (250) nach Anspruch 14, wobei die Gepäckabdeckung (250) wie in Anspruch 1 beansprucht beschaffen ist, um in einem hinteren Abteil eines Fahrzeugs (10) aufbewahrte Elemente (240) zu verbergen, wobei das Verfahren den folgenden anfänglichen Schritt umfasst:
(-) Befestigen der Befestigungsmittel (320) einer vorderen Abdecklage oder -platte (600) der Gepäckabdeckung (250) auf einem Gepäckboden (230) des hinteren Abteils;
gefolgt von den Schritten (a) bis (e) von Anspruch 14.

16. Verfahren zum Anbringen der Gepäckabdeckung (250) nach Anspruch 14 oder 15, wobei die Eingriffmittel (400) betätigbar sind, um durch elastische Vorrichtungen (410) in den Aufnahmemerkmalen der Seitenwände (620) befestigt zu werden.

17. Verfahren zum Anbringen einer Gepäckabdeckung (250) nach Anspruch 16, wobei die elastischen Vorrichtungen (410) in den Aufnahmemerkmalen der Seitenwände (620) durch die folgenden Schritte installiert werden:
(a) gleichzeitiges Ausüben eines longitudinalen Drucks, der in Richtung einer lang gestreckten Achse des vorderen lang gestreckten Elements (270) orientiert ist, auf dessen zwei Eingriffmittel (400) mit zugeordneten elastischen Vorrichtungen (410), wodurch die effektive Länge des vorderen lang gestreckten Elements (260) und seiner zugeordneten Eingriffmittel (400) verkürzt wird; und
(b) Positionieren der Eingriffmittel (400) in den Aufnahmemerkmalen in den Seitenplatten (620) in dem hinteren Abteil des Fahrzeugs (10); und
(c) Entlasten des longitudinalen Drucks, der auf die Eingriffmittel (400) ausgeübt wird und in das lang gestreckte Element (270) gerichtet ist, um dadurch die unterstützenden Befestigungselemente (400) an ihrem Ort in den Seitenwänden (620) zu halten.

18. Straßenfahrzeug (10), das eine Gepäckabdeckung (250) nach Anspruch 1 umfasst, wobei das Fahrzeug (10) ein hinteres Abteil mit Seitenwänden (620) enthält, wobei die Seitenwände (620) Aufnahmemerkmale umfassen, um Eingriffmittel (400, 410) lang gestreckter Elemente (270, 280) der Gepäckabdeckung (250) aufzunehmen, wobei das Fahrzeug (10) außerdem im hinteren Abteil einen Gepäckboden (230) aufweist, wobei der Gepäckboden (230) dazu ausgelegt ist, Befestigungsmittel (310, 320) der Gepäckabdeckung (250) aufzunehmen, um die Gepäckabdeckung (250) am Fahrzeug (10) zu befestigen, wenn sie sich in einem entfalteten Zustand befindet.

## Revendications

1. Cache-chargement (250) pour un compartiment arrière d'un véhicule (10), ledit compartiment arrière étant latéralement défini par des parois latérales associées (620) et ayant un plancher (230) de chargement, ledit cache-chargement (250) étant utilisable à l'état replié ou à l'état déployé , et ledit cache (250), lorsqu'il est à l'état déployé, étant utilisable pour cacher substantiellement à la vue le contenu dudit compartiment arrière, dans lequel
(a) ledit cache-chargement (250), lorsqu'il est dans ledit état déployé dans ledit véhicule (10), comprend une pluralité de feuilles ou panneaux de couverture (260, 290, 600), chaque feuille ou panneau de couverture (260, 290, 600) ayant une surface sensiblement plane associée, de telle sorte que lesdites surfaces planes de ladite pluralité de feuilles ou panneaux (260, 290, 600) ne soient pas parallèles entre elles lorsqu'il est dans ledit état déployé ; et
(b) ledit cache-chargement (250) comprend une pluralité d'éléments allongés (270, 280) destinés à définir ladite pluralité de feuilles ou panneaux (260, 290, 600), chaque élément allongé de ladite pluralité d'éléments allongés (270, 280) étant pourvu de moyens d'engagement (400, 410, 420, 430, 440) pour assujettir ladite pluralité d'éléments allongés (270, 280) à des éléments de réception dans lesdites parois (620) dudit compartiment arrière, permettant ainsi audit cache-chargement (250) d'être assujetti audit véhicule (10) à l'état déployé,
***caractérisé en ce que***
(c) ledit cache-chargement (250) comprend une feuille ou panneau de couverture supérieur (260), une feuille ou panneau de couverture arrière auxiliaire (290) et une feuille ou panneau de couverture avant auxiliaire (600), les feuilles ou panneaux auxiliaires de couverture (290, 600) étant agencés de façon à s'étendre, à l'état déployé, de la feuille ou panneau de couverture supérieur (260) en direction du plancher de chargement (230) du compartiment arrière, de façon que les feuilles ou panneaux de couverture (260, 290, 600) coopèrent pour cacher substantiellement de la vue extérieure ledit contenu du compartiment arrière, et
(d) lesdits feuilles ou panneaux auxiliaires avant et arrière (290, 600) sont pourvus de moyens de fixation pour assujettir lesdits feuilles ou panneaux auxiliaires avant et arrière (290, 600) audit plancher de chargement (230) dudit compartiment arrière.

2. Cache-chargement (250) selon la revendication 1, dans lequel l'un ou plusieurs de ladite pluralité de feuilles ou panneaux (260, 290, 600) sont fabriqués dans un matériau semi-rigide ou rigide.

3. Cache-chargement (250) selon la revendication 1, dans lequel l'un ou plusieurs de ladite pluralité de feuilles ou panneaux (260, 290, 600) sont fabriqués dans un matériau flexible pour permettre au cache-chargement (250) d'être roulé pour stockage lorsqu'il est dans ledit état replié.

4. Cache-chargement (250) selon la revendication 3, dans lequel ledit matériau flexible est fabriqué à partir d'un, ou d'une combinaison de deux, matériau(x) ou plus, choisis dans un groupe de matériaux comprenant matière plastique polychlorure de vinyle (PVC), matière plastique polyéthylène, matière plastique polypropylène, nylon, polyester, polyacrylate ou polytétrafluoroéthane (PTFE).

5. Cache-chargement (250) selon la revendication 1, dans lequel le cache-chargement (250) est mis en oeuvre sous forme d'un article moulé en matière plastique unitaire.

6. Cache-chargement (250) selon la revendication 1, dans lequel le cache-chargement (250) est mis en oeuvre sous forme d'un article cousu en tissu.

7. Cache-chargement (250) selon la revendication 6, dans lequel un ou plusieurs éléments allongés (270, 280) et feuilles semi-rigides ou rigides sont cousus pour être intégrés dans l'article en tissu.

8. Cache-chargement (250) selon l'une quelconque des revendications précédentes, dans lequel les moyens de fixation pour assujettir les feuilles ou panneaux auxiliaires de couverture (290, 600) au plancher de chargement (230) sont des dispositifs à crochet(s) (320) couplés à des cordages flexibles (310).

9. Cache-chargement (250) selon l'une ou plusieurs des revendications précédentes, dans lequel des coins extrêmes des feuilles ou panneaux auxiliaires de couverture (290, 600) sont chacun équipés d'une barre de renfort (650) couplée, par l'intermédiaire de cordages flexibles (310) à un dispositif à crochet(s) (320).

10. Cache-chargement (250) selon la revendication 8, dans lequel les moyens de fixation pour assujettir les feuilles ou panneaux auxiliaires de couverture (290, 600) au plancher de chargement (230) dudit compartiment arrière dudit véhicule (10) sont réglables en longueur pour s'assurer que lesdits feuilles ou panneaux auxiliaires de couverture soient tendus pendant l'utilisation lorsque ledit cache-chargement (250) est dans ledit état déployé.

11. Cache-chargement (250) selon l'une ou plusieurs des revendications précédentes, dans lequel les moyens d'engagement (400, 410, 420, 430, 440) pour assujettir ladite pluralité d'éléments allongés (270, 280) sont expansibles grâce à des dispositifs élastiques associés (410).

12. Cache-chargement (250) selon l'une ou plusieurs des revendications précédentes, dans lequel les moyens d'engagement (400, 410, 420, 430, 440) comprennent des boutons à chaque extrémité des éléments allongés (270, 280), moulés ou formés d'autre façon de manière à s'emboîter dans des dépressions ou des trous de réception situés sur les panneaux latéraux du compartiment arrière du véhicule (10).

13. Cache-chargement (250) selon l'une ou plusieurs des revendications précédentes, dans lequel les moyens d'engagement (400, 410, 420, 430, 440) sont effilés de manière à inclure une bride élargie (500) apte à recevoir à l'utilisation la force des doigts d'un utilisateur lors de l'engagement dans les dépressions ou trous de réception dans lesdites parois du compartiment arrière du véhicule (10).

14. Procédé de mise en place d'un cache-chargement (250), cache-chargement (250) selon la revendication 1, afin de cacher des articles stockés dans un compartiment arrière d'un véhicule (10), ledit compartiment arrière étant latéralement défini par des parois latérales associées (620) et ayant un plancher (230) de chargement, ledit procédé comprenant les étapes consistant à :
(a) soulever l'élément allongé avant (270) dudit couvercle (250) vers le haut, de manière sensiblement parallèle à une rangée de sièges arrière dudit véhicule (10), et de manière sensiblement perpendiculaire aux parois latérales (620) dudit compartiment arrière ;
(b) tendre le matériau de la feuille ou du panneau de couverture avant (600) dudit couvercle (250) ;
(c) fixer les deux moyens d'engagement (400) disposés aux extrémités extrêmes dudit élément allongé avant (270) dans les éléments de réception des parois latérales (620) dudit compartiment arrière ;
(d) installer d'une manière similaire l'élément allongé arrière (280) dans lesdites parois latérales (620) ; et
(e) déployer puis tendre la feuille ou le panneau de couverture arrière (290) dudit cache-chargement (250) en assujettissant ses moyens de fixation (320) dans le plancher de chargement (230) dudit compartiment arrière.

15. Procédé de mise en place d'un cache-chargement (250) selon la revendication 14, cache-chargement (250) selon la revendication (1), afin de cacher des articles stockés dans un compartiment arrière d'un véhicule (10), ledit procédé comprenant l'étape initiale consistant à :
(-) fixer lesdits moyens de fixation (320) d'une feuille ou d'un panneau de couverture avant (600) dudit cache-chargement (250) sur un plancher de chargement (230) dudit compartiment arrière ;
suivie des étapes (a) à (e) de la revendication 14.

16. Procédé de mise en place d'un cache-chargement (250) selon la revendication 14 ou 15, dans lequel les moyens d'engagement (400) sont utilisables pour être assujettis par des dispositifs élastiques (410) dans les éléments récepteurs des parois latérales (620).

17. Procédé de mise en place d'un cache-chargement (250) selon la revendication 16, dans lequel les dispositifs élastiques (410) sont installés dans les éléments récepteurs des parois latérales (620) par les étapes consistant à :
(a) exercer simultanément une pression longitudinale dirigée le long d'un axe longitudinal dudit élément allongé avant (270) sur ses deux moyens d'engagement (400) avec les dispositifs élastiques associés (410), raccourcissant ainsi la longueur effective dudit élément allongé avant (260) et ses moyens d'engagement associés (400) ; et
(b) positionner les moyens d'engagement (400) dans les éléments récepteurs situés dans les panneaux latéraux (620) à l'intérieur du compartiment arrière du véhicule (10) ; et
(c) relâcher la pression longitudinale appliquée aux moyens d'engagement (400) et dirigée dans l'élément allongé (270), maintenant ainsi en place dans les parois latérales (620) les éléments de fixation et de soutien (400).

18. Véhicule routier (10) comprenant un cache-chargement (250) selon la revendication 1, ledit véhicule (10) comportant un compartiment arrière avec des parois latérales (620), lesdites parois latérales (620) comportant des éléments récepteurs destinés à recevoir des moyens d'engagement (400, 410) d'éléments allongés (270, 280) dudit cache-chargement (250), ledit véhicule (10) comportant aussi un plancher de chargement (230) dans ledit compartiment arrière, ledit plancher de chargement (230) étant apte à recevoir des moyens de fixation (310, 320) dudit cache-chargement (250) pour assujettir ledit cache-chargement (250) audit véhicule (10) lorsqu'il est à l'état déployé.
